(19) **Europäisches Patentamt**
**European Patent Office**
**Office européen des brevets**

(11) **EP 4 179 377 B1**

(12) **EUROPEAN PATENT SPECIFICATION**

(45) Date of publication and mention
of the grant of the patent:
**22.10.2025 Bulletin 2025/43**

(21) Application number: **21739128.3**

(22) Date of filing: **02.07.2021**

(51) International Patent Classification (IPC):
*G02B 21/14* (2006.01)    *G02B 21/36* (2006.01)
*G01N 21/47* (2006.01)    *G01N 15/02* (2024.01)
*G01N 15/06* (2024.01)    *G01N 15/1429* (2024.01)
*G01N 15/1433* (2024.01)    *G01N 15/1434* (2024.01)
*G01N 15/0227* (2024.01)    *G01B 9/04* (2006.01)
*G01N 15/14* (2024.01)    *G01N 15/10* (2024.01)
*G01N 15/01* (2024.01)    *G03H 1/00* (2006.01)
*G03H 1/04* (2006.01)    *G03H 1/08* (2006.01)

(52) Cooperative Patent Classification (CPC):
**G02B 21/14; G01B 9/04; G01N 15/0227;**
**G01N 15/06; G01N 15/1429; G01N 15/1433;**
**G01N 15/1434; G01N 15/147; G02B 21/367;**
G01N 15/01; G01N 15/075; G01N 2015/1006;
G01N 2015/1454; G01N 2015/1486;
G01N 2015/1493;                    (Cont.)

(86) International application number:
**PCT/EP2021/068359**

(87) International publication number:
**WO 2022/008379 (13.01.2022 Gazette 2022/02)**

(54) **INTERFEROMETRIC SCATTERING OPTICAL MICROSCOPY**

OPTISCHE MIKROSKOPIE MIT INTERFEROMETRISCHER STREUUNG

MICROSCOPIE OPTIQUE À DIFFUSION INTERFÉROMÉTRIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **07.07.2020 GB 202010411**

(43) Date of publication of application:
**17.05.2023 Bulletin 2023/20**

(73) Proprietor: **Cambridge Enterprise Limited**
**Cambridge CB2 1TN (GB)**

(72) Inventors:
• **PETER, Quentin Alexis**
**Cambridge Cambridgeshire CB2 1EW (GB)**
• **JACQUAT, Raphaël**
**Cambridge Cambridgeshire CB41JN (GB)**
• **KRAINER, Georg**
**Cambridge Cambridgeshire CB2 1EW (GB)**

• **KNOWLES, Tuomas Pertti Jonathan**
**Cambridge Cambridgeshire CB2 1EW (GB)**

(74) Representative: **Stratagem IPM Limited**
**Meridian Court**
**Comberton Road**
**Toft, Cambridge CB23 2RY (GB)**

(56) References cited:
**WO-A1-2020/104813    WO-A2-2020/104814**
**US-A1- 2017 248 518**

• **STRACK RITA: "Scattering microscopy takes**
**single-particle tracking to the next level",**
**NATURE METHODS, NATURE PUB. GROUP,**
**NEW YORK, vol. 16, no. 6, 30 May 2019**
**(2019-05-30), pages 455, XP036796043, ISSN:**
**1548-7091, [retrieved on 20190530], DOI: 10.1038/**
**S41592-019-0438-3**

(52) Cooperative Patent Classification (CPC): (Cont.)
G01N 2015/1497; G03H 1/0443; G03H 1/0866;
G03H 2001/0038; G03H 2001/005;
G03H 2001/0447; G03H 2223/25

**Description**

FIELD

This specification relates to characterizing particles using interferometric scattering optical microscopy.

The work leading to this invention has received funding from the European Research Council under the European Union's Seventh Framework Programme (FP7/2007-2013) / ERC grant agreement no 337969. The project leading to this application has received funding from the European Union's Horizon 2020 research and innovation programme under the Marie Skłodowska-Curie grant agreement No 841466.

BACKGROUND

Interferometric scattering optical microscopy (iSCAT) is a technique in which an imaged particle is illuminated with coherent e.g. laser light and the signal results from interference between light scattered from the particle and a reference, typically light reflected from a nearby interface. This interference can result in signals which are amplified compared with some other approaches and the technique is capable of label-free detection of even single molecules, such as biological molecules for example proteins/protein complexes.

In more detail, the iSCAT signal can be separated into three components, the reference e.g. reflected laser light, the scattered light, and the interference between the two. The reference laser light is dominant but does not carry any information, the scattered light is too weak to detect, and only the interference signal is useful.

A review of iSCAT can be found in Taylor et al. "Interferometric Scattering Microscopy: Seeing Single Nanoparticles and Molecules via Rayleigh Scattering", Nano Letters 2019 19 (8), 4827-4835. Further background prior art can be found in: GB2552195; US2019/0195776; WO2019/110977; WO2015/059682; WO2018/189187; WO2018/047239; US2012/218629; WO2020/104813; WO2020/104814; and US2017/0248518.

One way to characterize particles using iSCAT would be to track the particles, but the interference signal can be small and tracking is hard: moving only a quarter wavelength in the depth-direction (z) can effectively make a particle disappear as the interference changes from constructive to destructive. One approach to this problem is to confine the particles in the depth direction and/or to use particle tracking techniques, but this is difficult in practice. iSCAT is typically performed on particles immobilized on a surface to stop the phase of the interference signal varying.

SUMMARY

The invention is defined by the independent claims. Preferred embodiments are defined by the dependent claims.

In one aspect there is therefore described a method of characterizing one or more particles in a fluid, e.g. a liquid, using interferometric scattering optical (iSCAT) microscopy. The method comprises illuminating a region of a fluid, in particular a liquid, with illuminating light using an objective lens to generate scattered light scattered by one or more particles in the fluid, and providing reference light. The reference light and illuminating light are coherent with one another.

The method further comprises capturing the reference light and the scattered light using the objective lens, and providing the reflected light and the scattered light to an imaging device, such that the reflected light and the scattered light interfere at the imaging device. The method further comprises capturing a succession of images of the interference, and processing the succession of images of the interference to determine a succession of image correlation values. The succession of image correlation values defines a (gradual) decorrelation over time of, i.e. between, the captured images of the interference. The method further comprises determining a property of the one or more particles from the succession of image correlation values defining the decorrelation over time, by fitting a decorrelation function to the succession of image correlation values.

The reference light may be provided by reflection from an interface. For example providing the reference light may comprise illuminating the region of the fluid through an interface, e.g. a boundary of the illuminated region, such that light is reflected from the interface to provide the reference light. Also or instead the reference light may be provided in some other way e.g. by using a portion of the illuminating light, or a source coherent with the illuminating light, as the reference. For example the illuminating light may comprise laser light and the laser light may be split into two (before or after the illuminated fluid) to generate the reference light.

In a still further arrangement excitation laser light impinges on the one or more particles from a first side of a sample of the fluid, and an optical system on a second, e.g. opposite, side of the sample collects the scattered light and the reference light i.e. the excitation laser light (which may be filtered to reduce its intensity, e.g. with a Fourier spatial filter). In such an arrangement no interface or reflection is needed (and later references to a region above a focal plane of the objective lens apply instead to a region below the focal plane).

In implementations an individual captured image may resemble noise, but by processing multiple images the correlation process is able to extract a decorrelation signal from the noise, and this can then be processed to characterize the one or more particles. This avoids the need to keep track of individual particles. Moreover the technique is able to process images in which particles are indistinguishable from noise in a single frame, where particle tracking is not possible. Thus implementations of the method are able to use iSCAT to characterize single particles, even when not apparent in the captured images. The particles may be or comprise molecules in aqueous solution, in particular biological molecules such as proteins. Further examples are given later.

The decorrelation over time may be used to determine one or more of a range of properties of the particles including their size, and/or shape, and/or number, and/or molecular weight, and/or interaction with the fluid e.g. liquid. Such a property is determined by fitting a corresponding decorrelation function to the succession of image correlation values.

In some implementations a physical size of the one or more particles is determined; the determined size may be a hydrodynamic radius (or average radius) of the one or more particles. This may be determined by fitting a decorrelation function which is dependent upon a diffusion coefficient for the one or more particles in the fluid e.g. liquid, where the diffusion coefficient depends on the (average) hydrodynamic radius.

The interface may define a boundary of the fluid e.g. the boundary of a microfluidic channel or chamber, or the boundary of a surface on which the liquid lies.

In some implementations a focal plane of the objective lens is located above the interface and the decorrelation function is substantially independent of a distance of the one or more particles from the focal plane in a direction along an optical axis of the objective lens, that is the z-direction. This can facilitate fitting the decorrelation function to the succession of image correlation values, and hence facilitates particle size determination.

The intensity of the scattered light may be used to determine particle concentration and/or a molecular weight for the one or more particles (or a total molecule weight of particles in the field of view), as the scattered light intensity depends on both of these.

Above the focal plane an intensity of the scattered light (and a pattern of the interference) depends strongly on the position of a particle in the z-direction i.e. on the distance of the one or more particles from the focal plane in the z-direction. In this region determination of particle concentration or molecular weight may have reduced accuracy. Nonetheless accuracy may be recovered by integrating over the z-direction e.g. by integrating over time such that the decorrelation is measured over a period long enough for a single particle to diffuse over the z-direction. For example this may comprise integrating over a sufficient time period for the one or more particles, on average, to diffuse a distance in the z-direction of at least a depth of field of the objective lens, or to diffuse a distance of at least half the distance between the interface and the focal plane. This dependency can also be integrated out if there is more than one particle e.g. several particles, randomly distributed in the z-direction.

In some other implementations the focal plane of the objective lens is located adjacent to or below the interface. By locating the focal plane below or at the interface the particles may be confined to the region above the focal plane. The decorrelation function may then comprise an average (of a decorrelation) over at least a region beyond the interface i.e. over a region extending in the z-direction further from the interface than the focal plane. In implementations the averaging may extend over this region a distance at least sufficiently to encompass a field of view of the imaging device in the z-direction. Optionally the decorrelation function may also be averaged over a region between the focal plane and the interface.

In implementations fitting the decorrelation function comprises identifying which of one or more basis functions best fits the succession of image correlation values. Each of the basis functions may be defined by the size of the one or more particles and may be integrated over a region further from the interface than the focal plane, e.g. a region beyond the interface, and optionally over a region between the interface and the focal plane. The precise mathematical form of the function integrated to determine a basis function may depend on what is being modelled, e.g. diffusion and particle hydrodynamic size, particle shape/orientation, and so forth.

Locating the focal plane of the objective lens above the interface places the focal plane in the bulk of the fluid, away from the interface. This effectively puts the interface out of focus, reducing the effect of scattering from the interface and increasing image contrast. Also, particularly when operating in this regime the intensity of the scattered light (later $|s|^2$) may be used to accurately determine particle concentration, or a count of the number of particles "visible" in the particle detection region, in particular by fitting the decorrelation function (i.e. basis functions).

In implementations of the method using interferometric scattering to determine the image correlation values results in the image correlation values including a noise term representing a noise variance in the signal from the captured images (which primarily arises from the reference light). Thus fitting the decorrelation function to the succession of image correlation values may include fitting an offset representing the noise level. Fitting the decorrelation function may also include fitting an additional function representing a systematic behavior or drift of the microscopy technique, e.g. a linear additional function; and/or a background correlation may be subtracted from the succession of image correlation values.

The interference pattern generated by a particle may comprise a set of concentric rings (visible when the particle is large enough for the pattern to be clearly visible). However if the particle moves by $\lambda/4$ in the z-direction, in particular when the particle is above the focal plane of the objective lens, the path length changes by twice this - more particularly, the interfering light changes in relative phase by $\pi$ - and the rings move inwards or outwards so that e.g. a central bright spot becomes a dark spot i.e. the interference pattern is inverted so that bright becomes dark, and vice-versa. During the correlation two frames may be combined by subtraction and the interference signal can take positive and negative values, so diffusion in the z-direction can result in an average zero signal. More generally diffusion in the z-direction can strongly suppress the interference signal if the frame rate is low. To mitigate this, the succession of images of the interference may be captured at a frame rate (or effective frame rate as discussed below) greater than a threshold frame rate. The threshold frame rate may be such that, on average, a particle does not diffuse in a z-direction by more than $\lambda/4$ between captured images, where $\lambda$ is a wavelength of the coherent light and the z-direction is defined by an optical axis of the objective lens. That is, the threshold frame rate may correspond to an inverse of the (de)correlation time (which may be defined by a decay constant for the correlation). Counter-intuitively, the signal decreases approximately according to the square root of the exposure time, as does the noise, and thus a longer exposure per se may not be beneficial.

The iSCAT signal depends on a product of the reflected and scattered light intensities. Whilst the reflected light intensity may be relatively constant, it is nonetheless useful to be able to separate the reflected and scattered light intensities, for example so that the scattered light intensity can be more easily used to estimate a number or concentration of particles present. This can be achieved by determining a square root of an intensity of the images of the interference before determining the succession of image correlation values. This approximately separates the reflected and scattered light intensities into separate terms, and the reflected light intensity term then drops from the correlation.

Noise in the image correlation values derived from interference images depends linearly on the intensity but varies as the square root of a number of image frames used to determine the image correlation values. Thus when collecting images for a particular effective image frame rate it can be beneficial to use a higher frame rate, with a consequently reduced intensity signal, and then combine or integrate multiple frames. However images combined in that way should not result in a total integration time longer than the (de)correlation time. Thus in some implementations processing the succession of images of the interference may include combining (integrating) images of the interference before determining the succession of image correlation values, provided that the combined images are separated in time by no more than a characteristic time of the decorrelation e.g. a time constant of correlation described by an exponential decay.

The image correlation values may in general be determined from a real-space representation of the captured images, or from a frequency-space representation of the captured images since (providing phase is preserved) these two representations are equivalent. There are many ways of determining an image correlation value representing the correlation between two images, For example in either real-space or frequency-space an image correlation value may be determined by summing a pixel-by-pixel comparison e.g. subtraction, of the two images. The succession of image correlation values may be determined by correlating an initial image with second images chosen at successively larger time intervals. However calculated the succession of image correlation values effectively defines the interference pattern decorrelation over time.

In some implementations differences between the images may determined in real space; this can assist in attenuating a bright reflected spot which may be present in a central part of the images.

In some implementations a space-frequency transform, e.g. a Fourier transform, may be performed to transform each of the images to a frequency (Fourier) space image before determining the succession of image correlation values.

For example each frequency space image may be spatially filtered to attenuate spatial frequencies greater than a maximum expected spatial frequency. This may involve masking a region of the frequency space image outside a central area e.g. circle of the frequency space image. For example in a real space image it may be expected that there are no features spaced closer than $\lambda/4$, and the frequency space images may be spatially filtered accordingly to attenuate higher frequency noise.

After such processing the frequency space images may be transformed back to real space, or the image correlation values may be determined from the frequency space images

In some implementations the frequency space images may be used to compensate for an overall translation of the particles when the fluid e.g. liquid is flowing. This is based on the recognition that translation of an interference pattern results in just a change in phase in frequency (Fourier) space.

Thus the method may include estimating a flow rate measure of the fluid e.g. liquid, e.g. an average phase, $\theta$, in frequency space, from a succession of the frequency space images. The flow rate measure may then be used to compensate for a flow of the fluid, for example by compensating a frequency space image, or value e.g. difference derived therefrom, for the average phase, and hence the translation, when determining an image correlation value using that frequency space image or value.

Thus estimating the flow rate measure may comprise determining a ratio of two of the frequency space images (e.g. per pixel), where the ratio defines the phase angle $\theta$. Compensating for the flow of the fluid may then comprise adjusting a phase angle of one or more of the frequency space images. For example, a difference between two successive frequency space (Fourier) images includes a phase term from the translation (fluid flow) and a scattering term from the change in interference (decorrelation). If the scattering term changes much less than phase term, e.g. because the images are closely spaced in time, then taking a ratio of these differences can approximately cancel the scattering term to extract the phase term. The difference between two frames comprises a translation term and a diffusion term, but the former can be assumed to be constant whilst the latter is random. Thus by averaging the ratio the diffusion term may be reduced towards zero leaving the translation term.

Again, the frequency space images may be transformed back to real space, with a correction to compensate for translation between images due to the fluid flow, and the image correlation values may be determined from the real space images; or the image correlation values may be determined from the frequency space images.

In some implementations an optical path of the coherent light to the objective lens is offset from the optical axis of the objective lens such that the coherent light illuminating the particle is at an oblique angle to the interface. However the reflected and scattered light may be captured in a direction along the optical axis of the objective lens. This can improve the contrast of the images of the interference, and also their signal-to-noise ratio.

In a related aspect there is described an interferometric scattering optical microscope system for characterizing one or more particles in a fluid e.g. a liquid. The system comprises a particle detection region; this may have a boundary defined by an interface. In use, the particle detection region includes one or more particles in a fluid e.g. a liquid.

The system includes a source of illuminating e.g. coherent light, and a source of reference light. The reference light and illuminating light are coherent with one another. The system further includes an objective lens to direct the illuminating light to illuminate the particle detection region such that the illuminating light is scattered by the one or more particles. The objective lens is configured to capture the reference light and the scattered light.

The system further comprises an imaging device, and includes an optical system to provide the reference light and the scattered light to the imaging device such that the reference light and the scattered light interfere at the imaging device.

The system also includes a processor configured to capture a succession of images of the interference. The processor is also configured to process the succession of images of the interference to determine a succession of image correlation values. The succession of image correlation values define a decorrelation over time of the captured images of the interference. The processor is also configured to determine a property of the one or more particles from the succession of image correlation values defining the decorrelation over time, by fitting a decorrelation function to the succession of image correlation values.

The particle detection region may have a boundary defined by an interface, which serves as the source of reference light. More particularly the objective lens may be configured to direct the illuminating light to illuminate the particle detection region through the interface such that the illuminating light is reflected from the interface to generate the reference light.

The source of coherent light may be e.g. a source of laser light or light from a narrowband LED source, optionally polarized e.g. linearly polarized. An optical path between the objective lens and coherent light source may include a beam splitter to separate the returned reflected and scattered light from the incident illuminating light; in other implementations these two light paths are at different spatial positions with respect to the optical axis. The imaging device may comprise a 1D or 2D image sensor, e.g. an EMCCD (Electron Multiplying Charge Coupled Device) sensor or a fast CMOS camera. An optical element such as a lens or mirror may focus returned reflected and scattered light onto the image sensor.

The processor may comprise e.g. a general purpose computer system, mobile device, or digital signal processor under stored program control. The stored program may be provided on one or more non-transitory physical data carriers such as programmed memory, and may comprise source, object or executable code in a conventional programming language, or code for a hardware description language. Code to implement the system may be distributed between a plurality of coupled components in communication with one another.

The particle detection region may comprise an imaging region of a microfluidic channel or chamber. The interface which generates the reflected light may be an inner boundary of such a channel or chamber i.e. an interface with the fluid e.g. liquid, although in principle it could be an exterior boundary. The interface is typically flat, but in principle may be curved. In some other implementations the interface is defined by a physical surface of a transparent support, e.g. a glass coverslip, which bears a droplet of the liquid, and the particle detection region is above the physical surface of the transparent support.

If the fluid is a liquid flowing in a microchannel it may have a generally flat flow profile across a width of the channel; this may be achieved by driving flow of the liquid by using electro-osmosis. The liquid may comprise or consist essentially of water. Prior to interrogation using the interferometric scattering optical microscope system the liquid may be been filtered, separated, or otherwise treated to enhance a relative proportion of a target particle or reduce the presence of unwanted particles.

Other features of the interferometric scattering optical microscope system may correspond to those of the previously described method, i.e. the system may include sub-systems/devices to implement these features.

The particles may comprise molecules or molecular complexes, such as biological molecules/complexes, e.g. proteins, protein complexes, or antibodies. More generally the particles may have a maximum dimension which is less than a wavelength of the coherent light, or less than half this wavelength. Such particles may include metallic or other nanoparticles, colloid particles, polymer particles, viruses, exosomes and other extra-cellular vesicles, proteins, and bio-particles in general. The particles may be non-fluorescent particles i.e. label-free. In implementations the method and system may be used to detect and characterize from one to thousands or millions of particles.

DRAWINGS

These and other aspects of the system will now be further described by way of example only, with reference to the accompanying figures, in which:

Figure 1 shows an iSCAT system.
Figures 2a-2g show a process for determining a property of a particle from a succession of interference images, and illustrations of steps in the process.
Figure 3 shows an example geometry for the system of Figure 1.
Figures 4a and 4b show a set of curves of basis functions, and an example best fit selection.

In the figures like elements are indicated by like reference numerals.

DESCRIPTION

This specification describes techniques for characterizing particles using correlations between images captured using interferometric scattering optical microscopy (iSCAT). The techniques may be used, for example, to detect and size proteins in aqueous solution, and to determine their concentration. The proteins do not need to be labelled, and single particles as well as large concentrations can be detected.

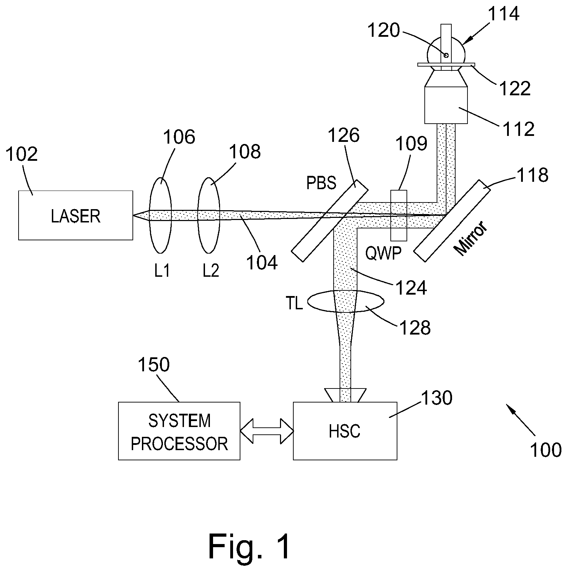

Figure 1 shows an example iSCAT system 100. A continuous wave laser 102 provides a beam 104 of coherent light e.g. in the visible region of the spectrum, for illuminating one or more particles 120 to be characterized as described later. This beam is collimated by a first lens 106 (if not already collimated), and focused by a second lens 108 onto the back focal plane of a microscope objective lens 112, in the example via a (polarizing) beam splitter 126 and mirror 118.

The objective lens 112, e.g. an oil immersion objective, may be adjusted to provide generally uniform illumination in a detection region 114. The objective lens 112 may be an oil immersion objective, that is a region between the objective lens and the interface may be filled with index matched oil to reduce the intensity of oil-glass reflections and hence reduce the number of interfaces seen by the laser illumination.

In some implementations the detection region 114 may be defined by upper and lower surfaces of a chamber or channel (not shown), fabricated e.g. from glass or polymer containing a solution including the one or more particles 120. A channel/channel may be used to contain/flow the solution through the detection region; in other implementations the solution may be contained on a surface by surface tension with no chamber used.

Part of the laser illumination is reflected from an optical interface 122, e.g. a transparent support such as a cover slip or a boundary of the channel/chamber, and part is transmitted to be scattered by the particle(s) 120. The reflected light and the scattered light are captured by objective lens 112, passed back along the optical path of the illumination, directed into a separate path 124 by the beam splitter 126, and imaged. As illustrated the reflected and scattered light are focused onto an image sensor 130, e.g. a high speed camera, by imaging optics 128 such as a tube lens. The image sensor 130 may be, for example, a CMOS image sensor or an EMCCD image sensor; it may have a frame rate sufficient to capture and track movement of an imaged particle. The image sensor captures interference between the reflected and scattered light. Merely by way of example, a camera for the system may have one or more of: a field of view of around $10 \mu m$ or greater; a similar depth of field; and a pixel size of less than $\lambda/2$.

A focal plane of the objective lens 112 may be located below the optical interface 122, confining the particle(s) to a region above the focal plane. Alternatively the focal plane may be located above the optical interface 122, in which case particle(s) in a region between the focal plane and the optical interface may be characterized; this region may also extend above the focal plane. The focal plane of the objective lens 112 may be viewed, conceptually, as representing a location of the image sensor.

The iSCAT system captures images of the interference between the scattered light and reference light. In the above example the reference light comprises the reflected light generated by reflection from the optical interface 122, but reference light may be provided in other ways e.g. by splitting the beam 104 to generate a reference beam.

In some implementations the source of coherent light is linearly or circularly polarized. For example in the illustrated example the optical path from the laser to the objective lens 112 includes a quarter wave plate 109 that converts linearly polarized light from the laser into circularly polarized light (and vice-versa on the return path).

In some implementations the particle(s) 120 may be illuminated at an oblique angle, e.g. by displacing an axis of the illuminating laser beam away from an optical axis of the objective lens 112. This facilitates separating the interference (i.e. signal) from the directly reflected light (a source of noise), e.g. with a spatial filter.

In some implementations the laser 102 is a laser diode. The limited coherence length of a laser diode can reduce unwanted coherent reflections within the system. However the coherence length should be at least twice a distance from the particle to the interface. A wavelength of the laser may be in the visible; shorter wavelengths are scattered more but a sensitivity of the image sensor and transmission of the optics may reduce at shorter wavelengths.

The iSCAT system of Figure 1 includes a system processor 150, configured to interface to the image sensor 130 to capture a succession of images of the interference between the scattered light and the reference light. The processor processes these images to determine image correlation values, as described later. The processor then characterizes the particle(s) from an observed decorrelation over time defined by the image correlation values. The processor may be configured to perform these tasks by suitable stored program code. In general the processor may include a user interface for the system e.g. for displaying results; and/or an external interface such as network connection for communicating or storing data from the system.

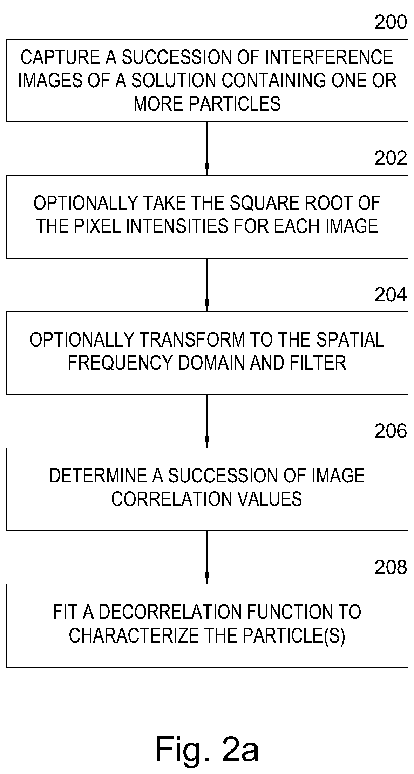

Figure 2a shows a process for determining a property of a particle from a succession of interference images.

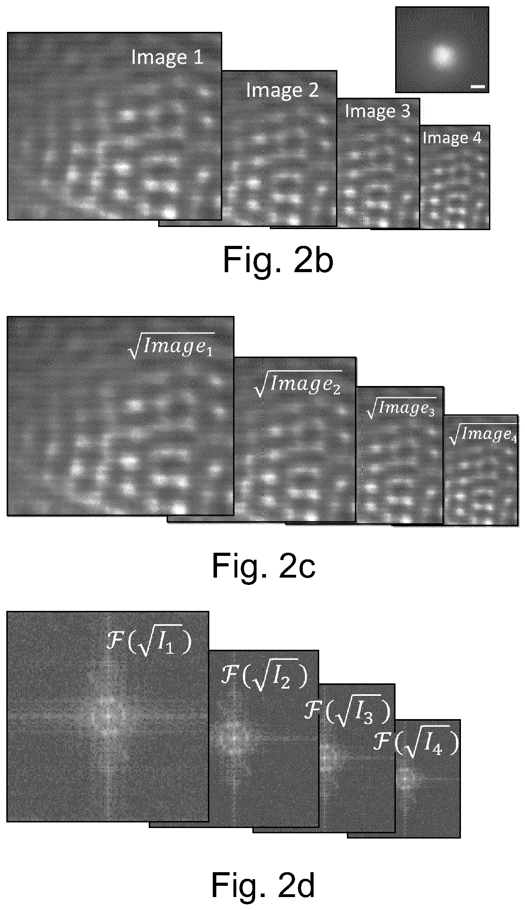

At step 200 the process captures a succession of interference images of a solution containing one or more particles to be characterized; each image may be termed an iSCAT signal. Figure 2b shows an example of such images. Although Figure 2b shows an interference pattern typically this is not clearly visible in a recorded image, which is dominated by the reflected intensity as shown by the inset example, an interference pattern only becoming visible when two frames are compared.

The images may be captured at a frame rate sufficient that, on average, a particle does not diffuse more than $\frac{\lambda}{4}$ in the z-direction between successive frames, where $\lambda$ is a wavelength of the illumination and the z-direction is along the optical axis of the objective lens 112. This can facilitate tracking the (de)correlation between frames. For example assuming a textbook diffusion equation a minimum frame rate may be given by $f_{minimum} = 2^5 D/\lambda^2$ where $D$ is a diffusion coefficient for the particle(s) (in $m^2/s$).

At step 202 the process optionally takes a square root of each image, for example by taking a square root of the intensity value of each image pixel. This can facilitate determining a level of the scattering signal (intensity), which in turn facilitates estimating properties dependent upon the scattering signal such as particle size, number, or molecular weight. Figure 2c shows an example of the result.

Taking the square root separates reflected ($r$) and scattered ($s$) intensity contributions to the iSCAT signal $I = I_0(|r|^2 + |r||s| \cos \phi)$ where $\phi$ is an interference phase given by a path difference between the reference (reflected) light and the scattered light at a focal plane of the image sensor and $I_0$ is the illumination intensity. A Taylor series expansion of $\sqrt{I}$ separates the reflected and scattered contributions, $\sqrt{I} \approx \sqrt{I_0} \left( |r| + \frac{|s| \cos \phi}{2} \right)$. This also reduces the shot noise variance of the iSCAT signal by a factor of 4. That is, for an iSCAT signal $I$ and a normalised noise variance $\sigma_n^2$ the shot noise variance of the iSCAT signal $\sigma_I^2 = I\sigma_n^2 \approx I_0|r|^2\sigma_n^2$ and the noise variance of the square rooted signal $\sqrt{I}$ is $\sigma_n^2/4$.

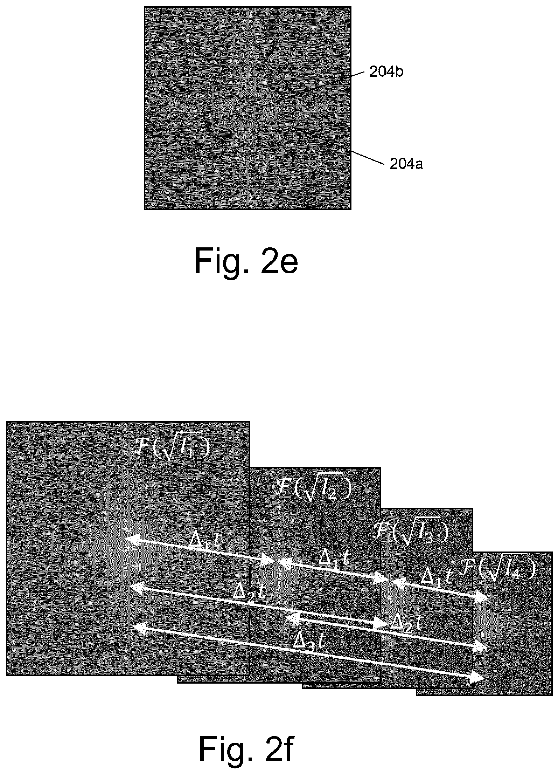

At step 204 the interference images may optionally be transformed to the spatial frequency domain, as shown in Figures 2d and 2e, e.g. by applying a (fast) Fourier transform to the images. This facilitates filtering to reduce noise. For example in the spatial frequency domain the interference signal is within a scattering circle e.g. of radius $n/\lambda$ (where $n$ is the refractive index of the fluid e.g. water in which the particle(s) are suspended), circle 204a in Figure 2e. The part of the image outside the scattering circle can be removed to reduce the shot noise. A region 204b of a residual spot from the laser reflection may also be removed. The filtered images may be converted back into the spatial domain, or subsequent processing may continue in the frequency domain.

At step 206 the process determines a succession of image correlation values e.g. from the captured image frames, or from their square roots, or from the transformed images in the spatial frequency domain. For example one way a correlation value may be determined, for two space- or frequency-domain images separated in time by $\Delta t$, is by determining a difference between the corresponding pixel values of each image and summing the result. There are many other ways of determining a measure of correlation between two images.

In some implementations the image correlation values are determined for successively increasing time intervals to obtain the succession of image correlation values. For example, as illustrated in Figure 2f, if the interval between two captured images is $\Delta_{frame}t$, the time intervals may be $\Delta_1 t = \Delta_{frame}t$, $\Delta_2 t = 2\Delta_{frame}t$, $\Delta_3 t = 3\Delta_{frame}t$ and so forth. A correlation value for a time interval $\Delta t$ may be determined by averaging over pairs of frames separated by $\Delta t$. Correlation values for larger time intervals may be less precise because there are fewer pairs of frames over which to average.

Then, at step 208, a decorrelation function is fitted to the succession of image correlation values to determine one or more properties of the particle(s). More particularly the decorrelation time depends on the diffusion coefficient of the particle(s), from which particle size, specifically hydrodynamic radius, can be determined.

In some implementations the decorrelation function may be fitted by fitting the succession of image correlation values to an equation describing the decorrelation. In some implementations the decorrelation function may be fitted by numerically calculating a set of basis functions, that is one or more functions using which the actual decorrelation may be modelled, and identifying one or a combination of the basis functions which best match the succession of image correlation values. Examples of both techniques are described later. The form of the basis functions may depend on the configuration of the iSCAT system and in principle could be determined by a system calibration.

The scattering signal also depends on the particle size, more particularly volume, and this in turn allows a weight or molecular weight to be estimated from an assumed particle or protein density. Also or instead a scale linking scattering signal to particle property e.g. molecular weight may be determined by calibration. The scattering signal may be determined by fitting the decorrelation function or more directly e.g. by integrating signal intensity over the scattering circle in the spatial frequency domain.

In an iSCAT system shot noise of the reflected light, more generally reference light, is a dominant source of noise. However the iSCAT signal depends on the reflected light intensity and thus naively increasing the image sensor exposure time does not improve the signal to noise ratio. When correlating two iSCAT images the noise signal is substantially the same no matter what the elapsed time between the images but the mean correlation increases as the elapsed time reduces. This recognition underlies the improved performance of iSCAT when the interference signal is used for determining a decorrelation signal from which to infer a property of the subject particle(s).

In general the correlation, $g^2$, between two images ($I$, $\sqrt{I}$, or frequency domain) may be defined as the normalized time average of the squared signal difference. For example in one implementation a (de)correlation between two square root images separated in time by $\Delta t$ is defined as

$$g^2 \equiv \frac{\left\langle \left( \Delta\sqrt{I} \right)^2 \right\rangle_T}{\left( \sqrt{I_0} \right)^2}$$

where $\langle \cdot \rangle_T$ denotes averaging over time and $\Delta\sqrt{I}$ denotes a difference between the two images. Then in this example the (de)correlation between the square rooted iSCAT interference images is given by the decorrelation function

$$g^2 = \frac{|s|^2}{4} \left( 1 - \exp\left( -\frac{\Delta t}{\tau} \right) \right) + \frac{\sigma_n^2}{2I_0}$$

where a characteristic decorrelation time $\tau$ is defined as $\tau = (q^2 D)^{-1}$ where

$$q = \frac{2\pi}{\lambda} \sqrt{4 - \left( 1 - \frac{Z}{\sqrt{\rho^2 + Z^2}} \right)^2}$$

and $\sigma_n^2 / 2I_0$ represents a noise variance of the correlation signal. Here Z denotes a distance of the particle from the focal plane of the objective lens along the z-direction, and $\rho$ denotes a distance of the particle from the optical axis of the objective lens perpendicular to the z-direction.

When averaging over $n$ frames the noise variance reduces to $\left( \sqrt{2}/n \right) \frac{\sigma_n^2}{2I_0}$ which depends linearly on image sensor exposure time (oc $I_0$) and on the square root of the number of frames. Thus noise can be reduced if image frames are combined or integrated then correlated, provided that the integration time is less than the correlation time $\tau$ (the signal to noise ratio maximum is for a single frame exposure time of less than half the correlation time).

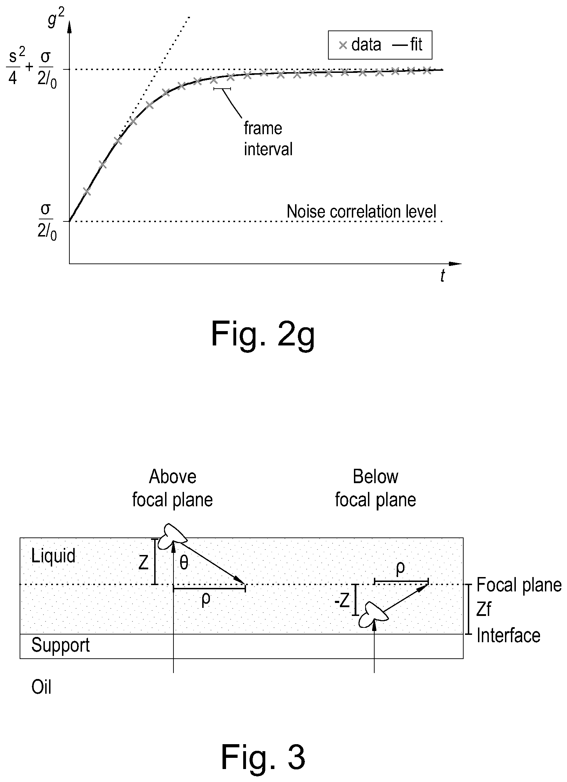

Figure 2g shows a curve of $g^2$ against time t for this example, conceptually illustrating fitting the decorrelation function to the correlation values. The correlation values may be fitted to the curve by calculating the correlation, $g^2$, from the correlation values for the succession of time intervals $\Delta_1 t, \Delta_2 t, \Delta_3 t$, and so forth. Values of the correlation calculated from the data i.e. from the captured iSCAT images, are indicated by crosses.

The curve of Figure 2g tends to a value determined by $s^2/4$ plus a noise level for the correlation $\sigma/2I_0$, as $\Delta t$ increases. The noise level may be disregarded or it may be included as a constant term when fitting the decorrelation curve.

The scattering intensity $s^2/4$, optionally with the noise level (at $\Delta t = 0$) subtracted, depends on the size (volume) of the particle(s) as the scattering cross-section of a single particle is given by $\sigma_{scatter} = \frac{8}{3}\pi^2|\alpha|^2\lambda^{-4}$ where

$$\alpha = 3\epsilon_m V\left(\frac{\epsilon_p - \epsilon_m}{\epsilon_p + 2\epsilon_m}\right),$$ $\varepsilon_p$ is the permittivity of the particle, $\varepsilon_m$ is the permittivity of the medium (solution) and $V$ is the particle volume. For a particular particle type e.g. a protein, a particle density and permittivity may be assumed. The particle volume then allows a measure of the total particle "weight", and an estimate of a particle molecular weight if the number of particles is known. Alternatively a number or concentration of the particles may be estimated if the particle molecular weight (and permittivity) is known.

In another approach the scattering intensity $s^2/4$ may be calibrated using known numbers of particles of different molecular weights to establish a (linear) calibration curve. This can then be used to estimate the molecular weight or number/concentration of particles in a solution to be characterized by the system.

Figure 3 shows an example geometry for the system in which the focal plane of the objective lens is above the interface, in which case the particle may be above or below the focal plane. Referring again to the decorrelation function, for $Z < 0$ i.e. when the particle is below the focal plane of the objective lens, i.e. the focal plane is above the interface 122, the value of $q$ has only a weak dependence on $Z$. That is, where the particle is on the way to the focal plane does not much affect the path length of light scattered by the particle. However for $Z > 0$ i.e. when the particle is above the focal plane of the objective lens, e.g. the focal plane is at or below the interface 122, the value of $q$ depends strongly on $Z$, inverting the interference pattern if $Z$ changes by a quarter wavelength. The initial slope of the curve of Figure 2g depends on the speed of decorrelation. For $Z > 0$ the decorrelation tends to be faster (greater slope) and less dependent on $Z$; for $Z < 0$ the decorrelation is slower (reduced slope) and more dependent on $Z$.

In some implementations a value for the characteristic decorrelation time $\tau$, and hence for the diffusion coefficient $D$, may be found by fitting the decorrelation function to the data i.e. to the correlation values. In one approach this involves calculating a set of curves of the type shown in Figure 2g, and then selecting the curve or curves which best fits the data. The curves may be referred to as basis functions. Optionally a weighted combination of two or more basis functions may be fitted to the data, and the diffusion coefficient $D$ may then be determined from a corresponding weighted combination of the values of $D$ used to generate the basis functions. Optionally an effective or hydrodynamic size of the particle may be determined e.g. from the Stokes-Einstein equation which defines that $D$ is inversely proportional to the hydrodynamic radius.

In some implementations the dependence on $Z$ (and $\rho$) is integrated out, especially where $Z > 0$. Physically this corresponds to an assumption that multiple particles are present with a distribution of values of $Z$ (and $\rho$), and/or to integration over a time period over which the particle(s) move in $Z$. For example the integration may be over a time period sufficient to allow a particle to diffuse in $Z$ a distance equal to the depth of field of the objective lens; or to diffuse in $Z$ at least half the distance between the interface and the focal plane.

For example, in some implementations a basis function is given by:

$$B(\Delta t) \equiv \int_{Zf}^{\infty} dZ \int_{0}^{\rho_{max}} \rho \, d\rho \, (|t^s(\theta)|^2 + |t^p(\theta)|^2 \cos^2(\theta)) \frac{\cos(\theta)}{R^2(\theta)}\left(1 - \exp\left(-\frac{\Delta t}{\tau(Z,\rho)}\right)\right)$$

where $Zf$ defines a location of the interface 122, a negative value indicating that the interface is below the focal plane (i.e. nearer to the illuminating source than the focal plane), $\rho_{max}$ is a value which may be chosen e.g. dependent on the horizontal field of view of the objective lens, and $\theta$ is defined by $\rho$ and $Z$ (as shown in Figure 3). The transmission coefficient for s- and p-polarised light are $t^s$ and $t^p$ respectively (the p-polarised light is seen at an angle from the detection point and thus the intensity decreases relative to the detection angle $\theta$ as $\cos^2(\theta)$), and because in this example the scattered light passes through the (transparent) support before detection Fresnel transmission coefficients $R(\cdot)$ are applied ($\left[\frac{n_1 \cos\theta_1}{n_2 \cos\theta_2}\right] t^2$).

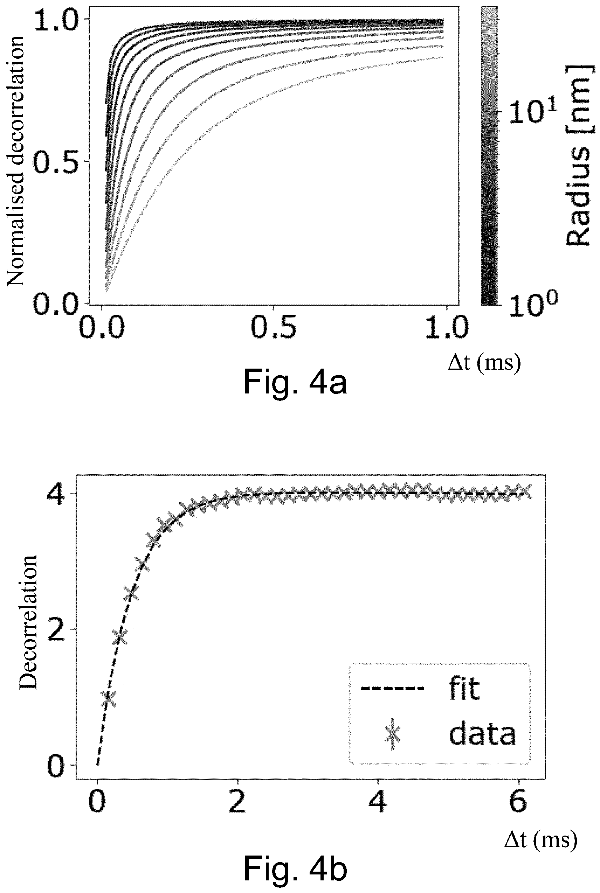

Figure 4a illustrates a set of curves of basis functions calculated in this manner, for a range of different particle radii, and Figure 4b illustrates an example best fit selection from amongst the basis functions which allows a radius for the particle to be determined. Optionally when fitting a basis function an offset corresponding to noise variance may be added as previously described; optionally a further term may be added to account for extraneous longer time correlations within the system e.g. a term linearly dependent on $\Delta t$.

Not shown in Figure 4a, the basis function curves also depend on the position of the interface with respect to the focal plane i.e. on $Zf$. For example, if the interface is above the focal plane the decorrelation is faster than if the interface is below the focal plane. In addition the integrated scattering intensity drops off when the particle is above the focal plane by greater than a field of view of the objective lens.

The basis function curves cease to be significantly dependent on $Zf$ when the interface 122 is around $20\mu m$ or more below the focal plane i.e. $Zf \leq -20\mu m$. In this regime, i.e. where the focal plane of the objective lens lies within the bulk of the fluid, the scattering intensity is also a reliable metric. An added benefit is that the interface 122 may not be in focus, reducing unwanted scattering from this surface.

Some implementations of the system may be used to characterize particles in flow, by separating a component of the signal due to the flow, most easily done by processing in the spatial frequency domain.

In the Fourier domain a translation is equivalent to a phase difference and thus for a translation ($\Delta x$, $\Delta y$) the Fourier transform of $f_{n+1}(x,y) = f_n(x + \Delta x, y + \Delta y)$ is $F_{n+1}(\varepsilon, \eta) = \exp(i\theta)F_n(\varepsilon, \eta)$ where $\theta \equiv 2\pi(\varepsilon\Delta x + \eta\Delta y)$. As before taking the square root of the iSCAT signal separates the reflected and scattered intensity and the Fourier transform of frame $n$ can be written as $F\{\sqrt{I_n}\} \approx F_r + F_{s,n}$. The Fourier transform of frame $n + 1$, $F_{s,n+1}$ is related to $F_{s,n}$ by a difference in the scattering pattern $\delta F_{s,n}$ arising from diffusion of the particle, and by a translation, $F_{s,n+1} = \exp(i\theta)F_{s,n} + \delta F_{s,n+1}$. The difference used to compute the interferometric iSCAT signal is therefore

$$\Delta_{n+1} = F_{s,n+1} - F_{s,n} = (\exp(i\theta) - 1)F_{s,n} + \delta F_{s,n+1}$$

and a similar forward calculation gives

$$\Delta_n = F_{s,n} - F_{s,n-1} = \exp(-i\theta)\big((\exp(i\theta) - 1)F_{s,n} + \delta F_{s,n}\big).$$

where $\theta = 0$ corresponds to no flow. The ratio $\Delta_{n+1}/\Delta_n$ may be taken as constant between pairs of frames to detect the offset by assuming $\delta F$ to be small so that $\Delta_{n+1}/\Delta_n \approx \exp(i\theta)$. This can be used to calculate a value for $\theta$, and hence the translation between frames and flow rate. Further, when $\theta$ is known, a difference $\Delta\Delta_n$ dependent upon $\delta F$ terms (which can be evaluated more easily than $F$) can be determined as follows:

$$\Delta\Delta_n = \Delta_{n+1} - \exp(i\theta)\Delta_n = \delta F_{s,n+1} - \delta F_{s,n}$$

Since $\Delta\Delta_n$ is a sum of Gaussian random variables with the same variance, $\Delta\Delta_n$ may be used as a correlation value as previously described, the contribution due to the flow having been removed.

Many alternatives will occur to the skilled person. The invention is not limited to the described embodiments and encompasses modifications apparent to those skilled in the art lying within the scope of the claims appended hereto.

**Claims**

1. A method of characterizing one or more particles in a fluid using interferometric scattering optical microscopy, comprising:

   illuminating a region of a fluid with illuminating light using an objective lens to generate scattered light scattered by one or more particles in the fluid;
   providing reference light, wherein the reference light and illuminating light are coherent with one another;
   capturing the reference light and the scattered light using the objective lens;
   providing the reference light and the scattered light to an imaging device, such that the reference light and the scattered light interfere at the imaging device;
   capturing a succession of images of the interference;
   **characterized in that** the method further comprises
   processing the succession of images of the interference to determine a succession of image correlation values, wherein the succession of image correlation values defines a decorrelation over time of the captured images of the interference; and
   determining a property of the one or more particles from the succession of image correlation values defining the decorrelation over time, by fitting a decorrelation function to the succession of image correlation values.

2. A method as claimed in claim 1 wherein providing the reference light comprises illuminating the region of the fluid through an interface such that light is reflected from the interface to provide the reference light.

3. A method as claimed in claim 1 or 2 wherein determining a property of the one or more particles comprises determining a size of the one or more particles by fitting the decorrelation function to the succession of image correlation values, wherein the decorrelation function is dependent upon a diffusion coefficient for the one or more particles in the fluid.

4. A method as claimed in claim 3 further comprising:

> locating a focal plane of the objective lens above the interface, and wherein the decorrelation function is substantially independent of a distance of the one or more particles from the focal plane in a direction along an optical axis of the objective lens; or
> locating a focal plane of the objective lens adjacent to or below the interface, and wherein the decorrelation function comprises an average over at least a region beyond the interface.

5. A method as claimed in any of claims 3-4 wherein the succession of images spans a time period sufficient to allow the one or more particles to, on average, diffuse a distance of at least half that between the interface and the focal plane or diffuse a distance equal to a depth of field of the objective lens.

6. A method as claimed in any of claims 3-5 wherein fitting the decorrelation function comprises identifying which of one or more basis functions best fits the succession of image correlation values, wherein each of the basis functions is defined by the size of the one or more particles, optionally wherein each of the basis functions is integrated over the region between the interface and the focal plane.

7. A method as claimed in any one of claims 3-6 wherein the decorrelation function is also dependent upon an intensity of the scattered light, and wherein determining a property of the one or more particles further comprises determining a concentration or count and/or molecular weight of the one or more particles in the fluid by fitting the decorrelation function.

8. A method as claimed in any one of claims 3-7 wherein fitting the decorrelation function to the succession of image correlation values includes fitting an offset representing a noise level.

9. A method as claimed in any one of claims 1-8 comprising capturing the succession of images of the interference with the imaging device at a frame rate greater than a threshold frame rate, wherein the threshold frame rate is such that, on average, one of the particles does not diffuse in a z-direction by more than $\lambda/4$ between captured images, where $\lambda$ is a wavelength of the illuminating light and the z-direction is defined by an optical axis of the objective lens.

10. A method as claimed in any one of claims 1-9 wherein processing the succession of images of the interference comprises combining images of the interference before determining the succession of image correlation values, wherein the combining comprises combining images separated in time by no more than a characteristic time of the decorrelation.

11. A method as claimed in any one of claims 1-10 wherein processing the succession of images of the interference comprises determining a square root of an intensity of the images of the interference before determining the succession of image correlation values.

12. A method as claimed in any one of claims 1-11 wherein processing the succession of images of the interference comprises performing a space-frequency transform to transform each of the images to a frequency space image before determining the succession of image correlation values, optionally wherein the method further comprises spatially filtering the frequency space image to attenuate spatial frequencies greater than a maximum expected spatial frequency.

13. A method as claimed in claim 12 further comprising estimating a flow rate measure of the fluid from a succession of the frequency space images, and using the flow rate measure to compensate for a flow of the fluid, optionally wherein estimating the flow rate measure comprises determining a ratio of two of the frequency space images, wherein the ratio defines a phase angle, and wherein compensating for the flow of the fluid comprises adjusting a phase angle of one or more of the frequency space images.

14. An interferometric scattering optical microscope system for characterizing one or more particles in a fluid, the system comprising:

a particle detection region wherein, in use, the particle detection region comprises one or more particles in a fluid;

a source of illuminating light;

a source of reference light, wherein the reference light and illuminating light are coherent with one another;

an objective lens to direct the illuminating light to illuminate the particle detection region through the interface such that the illuminating light is scattered by the one or more particles,

wherein the objective lens is configured to capture the reference light and the scattered light;

an imaging device;

an optical system to provide the reference light and the scattered light to the imaging device such that the reference light and the scattered light interfere at the imaging device; and

a processor configured to:

capture a succession of images of the interference;

**characterized in that** the processor is further configured to

process the succession of images of the interference to determine a succession of image correlation values, wherein the succession of image correlation values defines a decorrelation over time of the captured images of the interference; and

determine a property of the one or more particles from the succession of image correlation values defining the decorrelation over time, by fitting a decorrelation function to the succession of image correlation values.

15. An interferometric scattering optical microscope system as claimed in claim 14 wherein the particle detection region has a boundary defined by an interface; wherein the source of reference light comprises the interface; and wherein the objective lens is configured to direct the illuminating light to illuminate the particle detection region through the interface such that the illuminating light is reflected from the interface to generate the reference light.

**Patentansprüche**

1. Verfahren zum Charakterisieren von einem oder mehreren Partikeln in einem Fluid unter Verwendung von optischer Mikroskopie mit interferometrischer Streuung, umfassend:

Beleuchten einer Region eines Fluids mit Beleuchtungslicht unter Verwendung einer Objektivlinse, um Streulicht zu erzeugen, das durch ein oder mehrere Partikel in dem Fluid gestreut wird;

Bereitstellen von Referenzlicht, wobei das Referenzlicht und das Beleuchtungslicht kohärent miteinander sind;

Erfassen des Referenzlichts und des Streulichts unter Verwendung der Objektivlinse;

Bereitstellen des Referenzlichts und des Streulichts an eine Bildgebungsvorrichtung, sodass das Referenzlicht und das Streulicht an der Bildgebungsvorrichtung interferieren;

Erfassen einer Abfolge von Bildern der Interferenz;

**dadurch gekennzeichnet, dass** das Verfahren ferner Folgendes umfasst

Verarbeiten der Abfolge von Bildern der Interferenz, um eine Abfolge von Bildkorrelationswerten zu bestimmen, wobei die Abfolge von Bildkorrelationswerten eine zeitliche Dekorrelation der erfassten Bilder der Interferenz definiert; und

Bestimmen einer Eigenschaft des einen oder der mehreren Partikel aus der Abfolge von Bildkorrelationswerten, welche die zeitliche Dekorrelation definiert, durch Anpassen einer Dekorrelationsfunktion an die Abfolge von Bildkorrelationswerten.

2. Verfahren nach Anspruch 1, wobei das Bereitstellen des Referenzlichts Beleuchten der Region des Fluids durch eine Schnittstelle umfasst, sodass Licht von der Schnittstelle reflektiert wird, um das Referenzlicht bereitzustellen.

3. Verfahren nach Anspruch 1 oder 2, wobei das Bestimmen einer Eigenschaft des einen oder der mehreren Partikel Bestimmen einer Größe des einen oder der mehreren Partikel durch Anpassen der Dekorrelationsfunktion an die Abfolge von Bildkorrelationswerten umfasst, wobei die Dekorrelationsfunktion von einem Diffusionskoeffizienten für das eine oder die mehreren Partikel in dem Fluid abhängt.

4. Verfahren nach Anspruch 3, ferner umfassend:

Lokalisieren einer Fokusebene der Objektivlinse über der Schnittstelle, und wobei die Dekorrelationsfunktion im Wesentlichen unabhängig von einem Abstand des einen oder der mehreren Partikel von der Fokusebene in einer Richtung entlang einer optischen Achse der Objektivlinse ist; oder

**13**

Lokalisieren einer Fokusebene der Objektivlinse benachbart zu oder unter der Schnittstelle, und wobei die Dekorrelationsfunktion einen Durchschnitt über zumindest einer Region außerhalb der Schnittstelle umfasst.

5. Verfahren nach einem der Ansprüche 3-4, wobei die Abfolge von Bildern einen Zeitraum überspannt, der ausreicht, um dem einen oder den mehreren Partikeln zu ermöglichen, im Durchschnitt einen Abstand von zumindest der Hälfte desjenigen zwischen der Schnittstelle und der Fokusebene zu diffundieren oder einen Abstand gleich einer Feldtiefe der Objektivlinse zu diffundieren.

6. Verfahren nach einem der Ansprüche 3-5, wobei das Anpassen der Dekorrelationsfunktion Identifizieren umfasst, welche von einer oder mehreren Basisfunktionen am besten zu der Abfolge von Bildkorrelationswerten passt, wobei jede der Basisfunktionen durch die Größe des einen oder der mehreren Partikel definiert ist, wobei optional jede der Basisfunktionen über der Region zwischen der Schnittstelle und der Fokusebene integriert ist.

7. Verfahren nach einem der Ansprüche 3-6, wobei die Dekorrelationsfunktion auch von einer Intensität des Streulichts abhängt und wobei das Bestimmen einer Eigenschaft des einen oder der mehreren Partikel ferner Bestimmen einer Konzentration oder Zählung und/oder eines Molekulargewichts des einen oder der mehreren Partikel in dem Fluid durch Anpassen der Dekorrelationsfunktion umfasst.

8. Verfahren nach einem der Ansprüche 3-7, wobei das Anpassen der Dekorrelationsfunktion an die Abfolge von Bildkorrelationswerten Anpassen eines Versatzes beinhaltet, der einen Rauschpegel darstellt.

9. Verfahren nach einem der Ansprüche 1-8, umfassend Erfassen der Abfolge von Bildern der Interferenz mit der Bildgebungsvorrichtung mit einer Rahmenrate, die größer als eine Schwellenrahmenrate ist, wobei die Schwellenrahmenrate so ist, dass im Durchschnitt eines der Partikel nicht um mehr als $\lambda/4$ in einer z-Richtung zwischen erfassten Bildern diffundiert, wobei $\lambda$ eine Wellenlänge des Beleuchtungslichts ist und die z-Richtung durch eine optische Achse der Objektivlinse definiert ist.

10. Verfahren nach einem der Ansprüche 1-9, wobei das Verarbeiten der Abfolge von Bildern der Interferenz Kombinieren von Bildern der Interferenz vor dem Bestimmen der Abfolge von Bildkorrelationswerten umfasst, wobei das Kombinieren Kombinieren von Bildern umfasst, die zeitlich um nicht mehr als eine charakteristische Zeit der Dekorrelation getrennt sind.

11. Verfahren nach einem der Ansprüche 1-10, wobei das Verarbeiten der Abfolge von Bildern der Interferenz Bestimmen einer Quadratwurzel einer Intensität der Bilder der Interferenz umfasst, bevor die Abfolge von Bildkorrelationswerten bestimmt wird.

12. Verfahren nach einem der Ansprüche 1-11, wobei das Verarbeiten der Abfolge von Bildern der Interferenz Durchführen einer Raum-Frequenz-Transformation umfasst, um jedes der Bilder zu einem Frequenzraumbild zu transformieren, bevor die Abfolge von Bildkorrelationswerten bestimmt wird, wobei optional das Verfahren ferner räumliches Filtern des Frequenzraumbildes umfasst, um räumliche Frequenzen zu dämpfen, die größer als eine maximale erwartete räumliche Frequenz sind.

13. Verfahren nach Anspruch 12, ferner umfassend Schätzen eines Flussratenmaßes des Fluids aus einer Abfolge der Frequenzraumbilder und Verwenden des Flussratenmaßes, um einen Fluss des Fluids zu kompensieren, wobei optional das Schätzen des Flussratenmaßes Bestimmen eines Verhältnisses von zwei der Frequenzraumbilder umfasst, wobei das Verhältnis einen Phasenwinkel definiert und wobei das Kompensieren des Flusses des Fluids Einstellen eines Phasenwinkels von einem oder mehreren der Frequenzraumbilder umfasst.

14. Optisches Mikroskopsystem mit interferometrischer Streuung zum Charakterisieren von einem oder mehreren Partikeln in einem Fluid, wobei das System Folgendes umfasst:

eine Partikeldetektionsregion, wobei in Verwendung die Partikeldetektionsregion ein oder mehrere Partikel in einem Fluid umfasst;
eine Quelle von Beleuchtungslicht;
eine Quelle von Referenzlicht, wobei das Referenzlicht und das Beleuchtungslicht kohärent miteinander sind;
eine Objektivlinse, um das Beleuchtungslicht zu lenken, um die Partikeldetektionsregion durch die Schnittstelle zu beleuchten, sodass das Beleuchtungslicht durch das eine oder die mehreren Partikel gestreut wird, wobei die Objektivlinse dazu konfiguriert ist, das Referenzlicht und das Streulicht zu erfassen; eine Bildgebungsvorrichtung;

ein optisches System, um das Referenzlicht und das Streulicht der Bildgebungsvorrichtung bereitzustellen, sodass das Referenzlicht und das Streulicht an der Bildgebungsvorrichtung interferieren; und

einen Prozessor, der zu Folgendem konfiguriert ist:

Erfassen einer Abfolge von Bildern der Interferenz;

**dadurch gekennzeichnet, dass** der Prozessor ferner zu Folgendem konfiguriert ist Verarbeiten der Abfolge von Bildern der Interferenz, um eine Abfolge von Bildkorrelationswerten zu bestimmen, wobei die Abfolge von Bildkorrelationswerten eine zeitliche Dekorrelation der erfassten Bilder der Interferenz definiert; und Bestimmen einer Eigenschaft des einen oder der mehreren Partikel aus der Abfolge von Bildkorrelationswerten, welche die zeitliche Dekorrelation definieren, durch Anpassen einer Dekorrelationsfunktion an die Abfolge von Bildkorrelationswerten.

15. Optisches Mikroskopsystem mit interferometrischer Streuung nach Anspruch 14, wobei die Partikeldetektionsregion eine Grenze aufweist, die durch eine Schnittstelle definiert ist; wobei die Quelle von Referenzlicht die Schnittstelle umfasst; und wobei die Objektivlinse dazu konfiguriert ist, das Beleuchtungslicht zu lenken, um die Partikeldetektionsregion durch die Schnittstelle zu beleuchten, sodass das Beleuchtungslicht von der Schnittstelle reflektiert wird, um das Referenzlicht zu erzeugen.

## Revendications

1. Procédé de caractérisation d'une ou plusieurs particules dans un fluide à l'aide d'une microscopie optique à diffusion interférométrique, comprenant :

l'éclairage d'une zone d'un fluide avec une lumière d'éclairage à l'aide d'une lentille d'objectif pour générer une lumière diffusée qui est diffusée par une ou plusieurs particules dans le fluide ;

la fourniture d'une lumière de référence, la lumière de référence et la lumière d'éclairage étant cohérentes l'une avec l'autre ;

la capture de la lumière de référence et de la lumière diffusée à l'aide de la lentille d'objectif ;

la fourniture de la lumière de référence et la lumière diffusée à un dispositif d'imagerie, de sorte que la lumière de référence et la lumière diffusée interfèrent au niveau du dispositif d'imagerie ;

la capture d'une succession d'images de l'interférence ;

**caractérisé en ce que** le procédé comprend en outre

le traitement de la succession d'images de l'interférence pour déterminer une succession de valeurs de corrélation d'image, ladite succession de valeurs de corrélation d'image définissant une décorrélation au cours du temps des images capturées de l'interférence ; et

la détermination d'une propriété de la ou des particules à partir de la succession de valeurs de corrélation d'image définissant la décorrélation au cours du temps, en ajustant une fonction de décorrélation à la succession de valeurs de corrélation d'image.

2. Procédé selon la revendication 1, ladite fourniture de la lumière de référence comprenant l'éclairage de la zone du fluide à travers une interface de sorte que la lumière soit réfléchie par l'interface pour fournir la lumière de référence.

3. Procédé selon la revendication 1 ou 2, ladite détermination d'une propriété de la ou des particules comprenant la détermination d'une taille de la ou des particules en ajustant la fonction de décorrélation à la succession de valeurs de corrélation d'image, ladite fonction de décorrélation dépendant d'un coefficient de diffusion pour la ou les particules dans le fluide.

4. Procédé selon la revendication 3, comprenant en outre :

la localisation d'un plan focal de la lentille d'objectif au-dessus de l'interface, et ladite fonction de décorrélation étant sensiblement indépendante d'une distance de la ou des particules par rapport au plan focal dans une direction le long d'un axe optique de la lentille d'objectif ; ou

la localisation d'un plan focal de la lentille d'objectif adjacent à ou en dessous de l'interface, et ladite fonction de décorrélation comprenant une moyenne sur au moins une zone au-delà de l'interface.

5. Procédé selon l'une quelconque des revendications 3-4, ladite succession d'images couvrant une période de temps suffisante pour permettre à la ou aux particules de diffuser, en moyenne, sur une distance d'au moins la moitié de celle entre l'interface et le plan focal ou de diffuser sur une distance égale à une profondeur de champ de la lentille d'objectif.

6. Procédé selon l'une quelconque des revendications 3-5, ledit ajustement de la fonction de décorrélation comprenant l'identification de celle parmi une ou plusieurs fonctions de base qui correspond le mieux à la succession de valeurs de corrélation d'image, chacune des fonctions de base étant définie par la taille de la ou des particules, éventuellement chacune des fonctions de base étant intégrée sur la zone entre l'interface et le plan focal.

7. Procédé selon l'une quelconque des revendications 3-6, ladite fonction de décorrélation dépendant également d'une intensité de la lumière diffusée, et ladite détermination d'une propriété de la ou des particules comprenant en outre la détermination d'une concentration ou d'un comptage et/ou d'un poids moléculaire de la ou des particules dans le fluide en ajustant la fonction de décorrélation.

8. Procédé selon l'une quelconque des revendications 3-7, ledit ajustement de la fonction de décorrélation à la succession de valeurs de corrélation d'image comprenant l'ajustement d'un décalage représentant un niveau de bruit.

9. Procédé selon l'une quelconque des revendications 1-8, comprenant la capture de la succession d'images de l'interférence avec le dispositif d'imagerie à une fréquence de trames supérieure à une fréquence de trames seuil, ladite fréquence de trames seuil étant de sorte que, en moyenne, l'une des particules ne diffuse pas dans une direction z de plus de $\lambda/4$ entre les images capturées, où $\lambda$ est une longueur d'onde de la lumière d'éclairage et la direction z est définie par un axe optique de la lentille d'objectif.

10. Procédé selon l'une quelconque des revendications 1-9, ledit traitement de la succession d'images de l'interférence comprenant la combinaison d'images de l'interférence avant la détermination de la succession de valeurs de corrélation d'image, ladite combinaison comprenant la combinaison d'images séparées dans le temps par pas plus qu'un temps caractéristique de la décorrélation.

11. Procédé selon l'une quelconque des revendications 1-10, ledit traitement de la succession d'images de l'interférence comprenant la détermination d'une racine carrée d'une intensité des images de l'interférence avant la détermination de la succession de valeurs de corrélation d'image.

12. Procédé selon l'une quelconque des revendications 1-11, ledit traitement de la succession d'images de l'interférence comprenant la réalisation d'une transformée espace-fréquence pour transformer chacune des images en une image espace-fréquence avant de déterminer la succession de valeurs de corrélation d'image,
éventuellement ledit procédé comprenant en outre le filtrage spatial de l'image espace-fréquence pour atténuer des fréquences spatiales supérieures à une fréquence spatiale maximale attendue.

13. Procédé selon la revendication 12, comprenant en outre l'estimation d'une mesure de débit du fluide à partir d'une succession des images espace-fréquence, et l'utilisation de la mesure de débit pour compenser un écoulement du fluide, éventuellement ladite estimation de la mesure de débit comprenant la détermination d'un rapport de deux des images espace-fréquence, ledit rapport définissant un angle de phase, et ladite compensation de l'écoulement du fluide comprenant l'ajustement d'un angle de phase d'une ou plusieurs des images espace-fréquence.

14. Système de microscope optique à diffusion interférométrique destiné à caractériser une ou plusieurs particules dans un fluide, le système comprenant :

une zone de détection de particules, lors utilisation, ladite zone de détection de particules comprenant une ou plusieurs particules dans un fluide ;
une source de lumière d'éclairage ;
une source de lumière de référence, ladite lumière de référence et ladite lumière d'éclairage étant cohérentes l'une avec l'autre ;
une lentille d'objectif pour diriger la lumière d'éclairage pour éclairer la zone de détection de particules à travers l'interface de sorte que la lumière d'éclairage soit diffusée par la ou les particules,
ladite lentille d'objectif étant configurée pour capturer la lumière de référence et la lumière diffusée ;
un dispositif d'imagerie ;
un système optique pour fournir la lumière de référence et la lumière diffusée au dispositif d'imagerie de sorte que la lumière de référence et la lumière diffusée interfèrent au niveau du dispositif d'imagerie ; et

un processeur configuré pour :

capturer une succession d'images de l'interférence ;
**caractérisé en ce que** le processeur est en outre configuré pour
traiter la succession d'images de l'interférence afin de déterminer une succession de valeurs de corrélation d'image, ladite succession de valeurs de corrélation d'image définissant une décorrélation dans le temps des images capturées de l'interférence ; et
déterminer une propriété de la ou des particules à partir de la succession de valeurs de corrélation d'image définissant la décorrélation au cours du temps, en ajustant une fonction de décorrélation à la succession de valeurs de corrélation d'image.

15. Système de microscope optique à diffusion interférométrique selon la revendication 14, ladite zone de détection de particules possédant une limite définie par une interface ; ladite source de lumière de référence comprenant l'interface ; et ladite lentille d'objectif étant configurée pour diriger la lumière d'éclairage afin d'éclairer la zone de détection de particules à travers l'interface de sorte que la lumière d'éclairage soit réfléchie par l'interface afin de générer la lumière de référence.

Fig. 1

200

CAPTURE A SUCCESSION OF INTERFERENCE IMAGES OF A SOLUTION CONTAINING ONE OR MORE PARTICLES

202

OPTIONALLY TAKE THE SQUARE ROOT OF THE PIXEL INTENSITIES FOR EACH IMAGE

204

OPTIONALLY TRANSFORM TO THE SPATIAL FREQUENCY DOMAIN AND FILTER

206

DETERMINE A SUCCESSION OF IMAGE CORRELATION VALUES

208

FIT A DECORRELATION FUNCTION TO CHARACTERIZE THE PARTICLE(S)

Fig. 2a

Fig. 2b

Fig. 2c

Fig. 2d

Fig. 2e

Fig. 2f

Fig. 2g

Fig. 3

Fig. 4a

Fig. 4b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2552195 A
- US 20190195776 A
- WO 2019110977 A
- WO 2015059682 A
- WO 2018189187 A
- WO 2018047239 A
- US 2012218629 A
- WO 2020104813 A
- WO 2020104814 A
- US 20170248518 A

**Non-patent literature cited in the description**

- **TAYLOR et al.** Interferometric Scattering Microscopy: Seeing Single Nanoparticles and Molecules via Rayleigh Scattering. *Nano Letters*, 2019, vol. 19 (8), 4827-4835